# EUROPÄISCHE PATENTSCHRIFT

(11) **EP 2 539 253 B1**
(45) Veröffentlichungstag und Bekanntmachung des Hinweises auf die Patenterteilung: **02.04.2014**
(21) Anmeldenummer: 10801171.9
(22) Anmeldetag: 30.12.2010
(51) Int. Cl.: B65G 39/16

(54) **VORRICHTUNG ZUR REGELUNG DES GERADEAUSLAUFS EINES GURTES**
DEVICE FOR REGULATING THE LINEAR STABILITY OF A BELT
DISPOSITIF DE RÉGULATION DE L'ALIGNEMENT D'UNE COURROIE

(30) Priorität: 22.02.2010 DE 102010002172
(43) Veröffentlichungstag der Anmeldung: 02.01.2013
(73) Patentinhaber: Robert Bosch GmbH, 70442 Stuttgart (DE)
(72) Erfinder: MAIWALD, Andreas, CH-8217 Wilchingen (CH)
(86) Internationale Anmeldenummer: PCT/EP2010/070918
(87) Internationale Veröffentlichungsnummer: WO 2011/101068

(56) Entgegenhaltungen:
- EP-A1- 1 279 629
- EP-A2- 1 122 200

## Beschreibung

### TECHNISCHES GEBIET

Die vorliegende Erfindung betrifft eine Vorrichtung zur Regelung des Geradeauslaufs eines umlaufenden Gurtes einer Transportanlage nach dem Oberbegriff des Anspruchs 1.

### STAND DER TECHNIK

Transportanlagen mit umlaufenden Bändern werden beispielsweise als sogenannte "Austragestationen" eingesetzt und sind u.a. in US-A-3 429 416 und EP-A-0 558 123 beschrieben. Zweck dieser Anlagen ist, einen Produktstrom mit einer Vielzahl von Produkten, zum Beispiel Schokoladeriegeln oder Biscuits, welche meist direkt ab einem Herstellprozess angeliefert werden, auf mehrere Verpackungsmaschinen zu verteilen.

Dabei werden die Produkte aus einem Haupttransportstrom, in dem sie in Reihen angeordnet bewegt werden, durch bewegbare Bandabschnitte auf die einzelnen, meist quer zum Haupttransportstrom angeordneten Zuführeinrichtungen der einzelnen Verpackungsma-schinen überführt. Abhängig von den spezifischen Anforderungen wie Platzbedarf, Anlagengeschwindigkeit, Produkteigenschaften sowie Bedienerfreundlichkeit und Zugänglichkeit für Reinigung und Wartung, sind hier eine Vielzahl von Anordnungen bekannt.

Die eingesetzten, breiten Bänder neigen dazu, dass sie "schräg" laufen, weshalb es zur Sicherstellung des Geradeauslaufs der Bänder einer besonderen Vorrichtung bedarf. Eine solche Vorrichtung der eingangs genannten Art für eine Austragestation ist aus EP-A-0 659 663 bekannt. Dabei ist eine Andrückrolle unterhalb des Haupttransportbandes angeordnet. Die eine geringe Umschlingung aufweisende Andrückrolle kann im Rahmen einer passiven Gurtsteuerung auf einer Seite vor- und zurückbewegt werden. Durch diese Bewegung wird das Band in eine gewünschte Richtung gelenkt.

Die aus der EP-A-0 659 663 bekannte Gurtsteuerung hat den Nachteil, dass die Steuerrolle nur eine geringe Umschlingung aufweist. Daher ist nur ein begrenzter Einfluss auf den Gurtlauf möglich. Die Steuerrolle wirkt zudem auf die Aussenseite des Gurtes ein, die bei einer fortschreitenden Verschmutzung meist eine immer geringere Reibung bzw. Kraftübertragung zulässt, so dass sich die Steuerbarkeit des Gurtes weiter verschlechtert. Weiter wird von der Sensorik nur das Erreichen der beiden Extrempositionen der Gurtkanten überwacht und dann jeweils umgesteuert, so dass sich ein ständig zwischen den beiden Extrempositionen hin und her schlingernder Gurtlauf ergibt Ein weiterer Nachteil ergibt sich daraus, dass die Bandrollen fest mit dem Rahmen der Station verbunden sind. Aus diesem Grund muss für einen Gurtwechsel der Gurt aufgeschnitten und der neue Gurt auf der Anlage verschweisst werden. Falls ein Endlosgurt direkt gewechselt werden sollte, müssen bei dieser Anlage alle Rollen, die vom Gurt umschlungen werden, ausgebaut werden.

Aus der EP 1 279 629 ist eine Vorrichtung zur Regelung des Geradeauslaufs eines umlaufenden Gurtes einer Transportanlage nach dem Oberbegriff des Anspruchs 1, sowie ein Verfahren zur Regelung eines Transportbandes bekannt geworden.

### DARSTELLUNG DER ERFINDUNG

Der Erfindung liegt die Aufgabe zugrunde, eine Vorrichtung zu schaffen, welche den Geradeauslauf eines Gurtes in einer Transportanlage, insbesondere in einer Austragestation, sicherstellt und die vorstehend genannten Nachteile nicht aufweist. Insbesondere soll anstelle einer Steuerung zwischen Grenzwerten eine Regelung um einen Sollwert möglich sein, um so die Schlingerbewegung des Gurtes zu minimieren. Die Umschlingung des Gurtes um die Steuerrolle sollte möglichst gross sein, um einen möglichst starken Einfluss auf den Gurtlauf sicherzustellen. Die Steuerung soll von der meist eine grössere und vor allem gleichbleibende Reibung aufweisenden Innenseite des Gurtes her erfolgen, da diese keiner Verschmutzung durch transportierte Produkte unterworfen ist.
Auch soll ein einfacher Wechsel des Gurtes möglich sein, ohne dass dieser aufgeschnitten und der neue Gurt auf der Anlage verschweisst werden muss.

Zur erfindungsgemässen Lösung der Aufgabe führt bei einer Vorrichtung nach Anspruch 1. Das die Gurtschlaufe umlaufende Band weicht bevorzugt um nicht mehr als ± 20° von der Senkrechten zur Transportebene ab. Gleiches gilt auch für die Schwenkebene der Steuerrolle.

Die Steuerrolle ist einseitig auf einer, vorzugsweise elektrisch, höhenverstellbaren Wippe gelagert.

Bevorzugt dient die Steuerrolle gleichzeitig als Antriebsrolle.

Die Wippe ist zweckmässigerweise über ein Getriebe, vorzugsweise über ein Keilgetriebe, in ihrer Höhe verstellbar.

Zum Ausbau der Steuerrolle ist die Wippe in Achsrichtung der Steuerrolle von der Steuerrolle weg verschiebbar. Hierzu ist die Wippe zweckmässigerweise seitlich in je einem Langloch von seitlichen Halterungen gelagert.

Zum Erfassen der Position des Gurtes und der Lage der Steuerrolle für die Regelung um einen Positions- bzw. Lagesollwert des Gurtes und der Steuerrolle ist eine Regeleinrichtung mit Sensoren vorgesehen.

Bevorzugt beträgt die Umschlingung der Steuerrolle 90 bis 210°, vorzugsweise 150 bis 180°.

### KURZE BESCHREIBUNG DER ZEICHNUNGEN

Weitere Vorteile, Merkmale und Einzelheiten der Erfindung ergeben sich aus der nachfolgenden Beschreibung bevorzugter Ausführungsbeispiele sowie anhand der Zeichnung, die lediglich zur Erläuterung dient und nicht einschränkend auszulegen ist. Die Zeichnung zeigt schematisch in
- Fig. 1: eine Seitenansicht eines Gurtlaufs bei einer erfindungsgemässen Vorrich-tung;
- Fig. 2: eine Sicht auf den Gurtlauf von Fig. 1 in Blickrichtung Y;
- Fig. 3: eine Seitenansicht einer erfindungsgemässen Vorrichtung;
- Fig. 4: die Vordersicht auf die Vorrichtung von Fig. 3;
- Fig. 5: die Sicht auf die Vorrichtung von Fig. 4 in Blickrichtung Y;
- Fig. 6: eine Schrägsicht auf ein Detail von Fig. 5 mit Wippe und entriegelter An-triebs- und Steuerrolle in vergrösserter Darstellung;

### BESCHREIBUNG BEVORZUGTER AUSFÜHRUNGSFORMEN

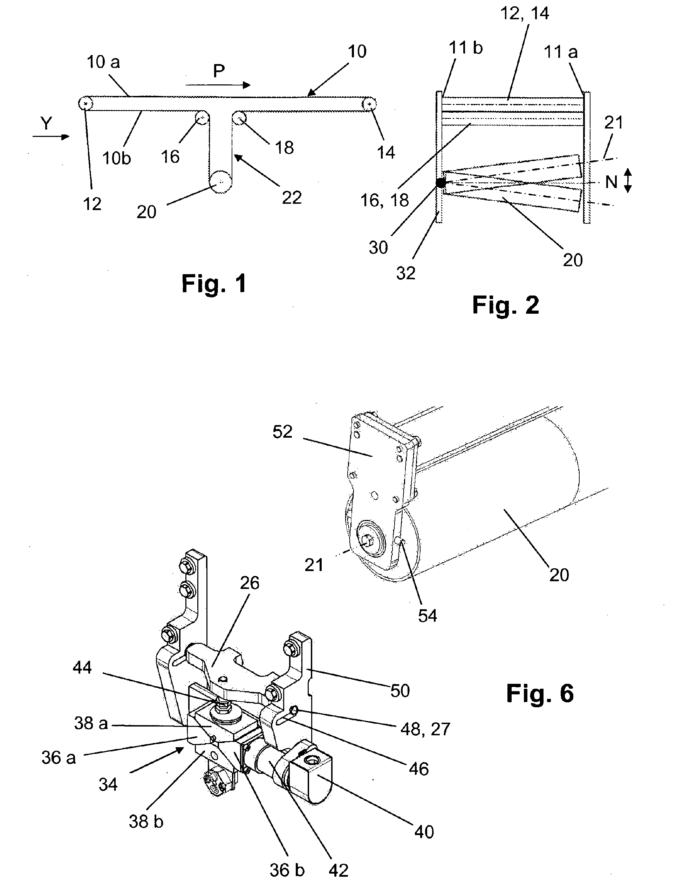

Fig. 1 zeigt ein endloses Transportband 10 mit einem zwischen einer ersten und einer zweiten Umlenkrolle 12, 14 angeordneten, horizontal verlaufenden Transporttrum 10A und einem Rücklauftrum 10B. Das Rücklauftrum 10B ist über eine dritte und eine vierte Umlenkrolle 16, 18 zu einer, im wesentlichen senkrecht von der horizontalen Ebene des Transporttrums 10A abragenden, eine Antriebs- und Steuerrolle 20 umschlingenden Gurtschlaufe 22 geformt. Das Band oder der Gurt 10 läuft als Transporttrum10A in Pfeilrichtung P. Das Band 10 ist beispielsweise 1,5 m breit und weist zwei parallel zueinander verlaufende Band- oder Gurtkanten 11 auf. Um den Geradeauslauf des Bandes 10 zu regeln, ist die Achse 21 der Antriebs- und Steuerrolle 20 um ihre horizontale Normallage N auf und ab schwenkbar. Hierzu ist die Antriebs- und Steuerrolle 20 an einem Ende über ein Schwenklager 30 an einem Maschinenrahmen 32 angelenkt. Das andere Ende kann über einen weiter unten näher beschriebenen Hubmechanismus angehoben und abgesenkt werden, was zu einer zeitweiligen Schrägstellung der Antriebs- und Steuerrolle 20 bezüglich einer senkrecht zur Bandlaufrichtung definierten Normallage führt (Fig. 2).

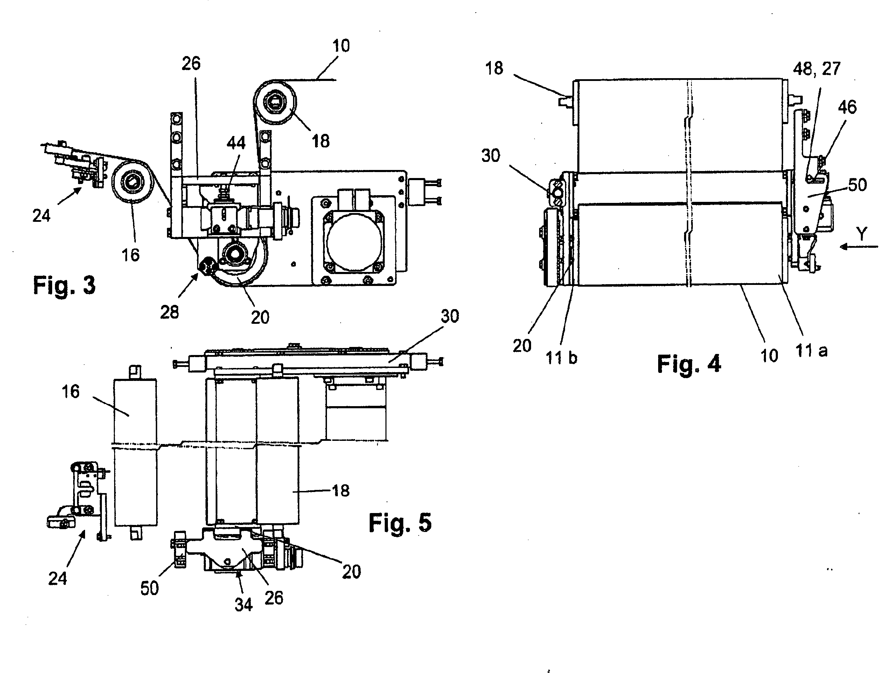

In den Fig. 3 bis 5 ist die Lagerung der Antriebs- und Steuerrolle 20 und die Anordnung von Abstandssensoren zur Gurtregelung dargestellt. Ein erster Abstandssensor 24 dient der absoluten Erfassung der Gurtposition, d.h. der seitlichen Abweichung einer Gurtkante 11 von einer Normalposition. Die Gurtposition wird mit Hilfe z.B. eines induktiven Wegmess-Sensors erfasst und mit dem der Normalposition entsprechenden Sollwert verglichen, so dass eine Stellgrösse für die Auslenkung der Antriebs- und Steuerrolle 20 aus ihrer horizontalen Normallage N generiert werden kann. Dabei lagert die Antriebs- und Steuerrolle 20 auf einer höhenverstellbaren Wippe 26, so dass sich ihre Achse 21 um eine Horizontallage auf einer Seite auf und ab bewegen lässt. Mittels eines zweiten, optionalen Abstandssensors 28 wird die Lage der Antriebs- und Steuerrolle 20 absolut erfasst, so dass eine echte Regelung des Gurtes 10 um einen Lagesollwert stattfinden kann. Anstelle des Abstandssensors 28 kann z. B. auch ein Motor mit Absolutfeedback verwendet werden

Die Umschlingung der Antriebs- und Steuerrolle 20 durch den Gurt ist nahezu 180 Grad, so dass eine sehr gute Beeinflussung des Gurtlaufes möglich ist.

Wie aus Fig. 6 ersichtlich, erfolgt die Höhenverstellung der Wippe 26 über ein Keilgetriebe 34. Das Keilgetriebe 34 besteht aus zwei einander gegenüberstehenden Horizontalkeilen 36 a, 36 b und zwei einander gegenüberstehenden Vertikalkeilen 38 a, 38 b wobei die Keilspitzen auf ein gemeinsames Zentrum weisen und die Keilflächen der Horizontalkeile 36 a, 36 b den Keilflächen der benachbarten Vertikalkeile 38 a, 38 b gleitend verschiebbar aufliegen. Zur Regelung des Geradeauslaufs des Gurtes 10 muss die Achse der Antriebs- und Steuerrolle 20 entgegen der hohen Spannkräfte des Gurtes verschwenkt werden. Das im dargestellten Beispiel eingesetzte Keilgetriebe 34 ist für diesen Zweck gut geeignet. Dabei werden die Horizontalkeile 36 a, 36 b mittels eines Antriebs 40 und eines Getriebeflansches 42 mit innenliegender Spindel aufeinander zu oder auseinander bewegt, wodurch sich der obere Vertikalkeil 38 a anhebt bzw. absenkt. Das notwendige Drehmoment zur Verstellung kann problemlos z.B. von einem herkömmlichen kompakten DC-Stellmotor mit hoher Getriebeübersetzung mittels beispielsweise eines Planetengetriebes aufgebracht werden. Die Kraftübertragung vom oberen Vertikalkeil 38 a auf die Wippe 26 erfolgt über eine zwischengeordnete Hubstange 44. Die Wippe 26 ist über seitlich abragende Führungszapfen 27 in Langlöchern 46 seitlicher Halterungen 50 geführt. In verriegelter Position der Wippe 26 ruhen die Führungszapfen 27 in einer Rastposition 48 jedes Langlochs 46. Die Achse 21 der Antriebs- und Steuerrolle 20 ist auf der Seite der Wippe 26 in einer Halterplatte 52 gelagert. Von der Halterplatte 52 ragen seitlich zwei Stützzapfen 54 zur Auflage auf der Wippe 26 ab. Die Wippe 26 kann durch Verschieben der Führungszapfen 27 aus der Rastposition 48 in den Langlöchern 46 entriegelt und von der Halterplatte 52 mit den seitlich von dieser zur Auflage auf der Wippe 26 abragenden Stützzapfen 54 entfernt werden. Auf diese Weise kann die Antriebs- und Steuerrolle 20 nach oben geschwenkt werden, so dass der Gurt 10 zerstörungsfrei entnommen werden kann. Die weiteren Rollen, wie die Umlenkrollen 16, 18, können z. B. so in nach oben offenen Nuten gelagert sein, dass sie sich einfach nach oben entnehmen lassen. Alternativ können die weiteren Rollen ebenfalls nach oben schwenkbar angebracht sein. Damit kann das Band, ohne dass es aufgeschnitten werden muss, von den Rollen abgezogen werden und ein neues, bereits geschlossenes, endloses Band, aufgeschoben werden.

Die wesentlichen Vorteile der erfindungsgemässen Vorrichtung sind:
- Durch die grosse Umschlingung und sehr gute Traktion der Steuer- und Antriebsrolle kann über diese mit einer sehr hohen Güte der Gurtlauf geregelt werden.
- Eine Verschmutzung des Gurtes, z.B. durch Produkte, hat wenig Einfluss auf die Gurtregelung, da die Steuer- und Antriebsrolle die Innenseite des Gurtes kontaktiert.
- Einfacher, kostengünstiger Aufbau - keine separate Steuerrolle für die Gurtregelung erforderlich, es wird die vorhandene Antriebsrolle genutzt.
- Absolute Erfassung der Gurtposition ermöglicht eine echte Regelung um einen Sollwert und damit eine nur geringe Schlingerbewegung des Gurtes.
- Durch Entriegeln der Wippe kann mit dem selben Gelenk, welches für die Gurtregelung genutzt wird, die Steuer- und Antriebsrolle nach oben geklappt und so der endlose Gurt ohne Aufschneiden bzw. Verschweissen entnommen ersetzt werden.

## Patentansprüche

1. Vorrichtung zur Regelung des Geradeauslaufs eines umlaufenden Gurtes (10) einer Transportanlage mittels einer quer zu einer Gurtlaufrichtung angeordneten, an den Gurt (10) angedrückten Steuerrolle (20), die mittels eines mit einem die seitliche Position des Gurtes (10) feststellenden Sensor (24) zusammenarbeitenden Stellantriebs auslenkbar ist, um bei einem seitlichen Auswandern des Gurtes (10) die Steuerrolle (20) zum Ausrichten des Bandes auszulenken, wobei die Steuerrolle (20) auf einer Achse (21) gelagert ist, welche im Bereich einer ersten Kante (11 a) des Gurtes (10) schwenkbar gelagert ist und im Bereich der zweiten Kante (11 b) des Gurtes (10) an ihrem zweiten Ende mit Führungs- und Verstellmitteln verbunden verschiebbar geführt ist, wobei
die Steuerrolle (20) auf der Innenseite des Gurtes (10) in einer im wesentlichen senkrecht zu einer Transportebene liegenden Gurtschlaufe (22) mit hoher Umschlingung angeordnet und im wesentlichen senkrecht zur Transportebene schwenkbar ist,
wobei die Steuerrolle (20) einseitig auf einer, vorzugsweise elektrisch, höhenverstellbaren Wippe (26) gelagert ist, **dadurch gekennzeichnet,**
**dass** zum Ausbau des Gurtes (10) die Wippe (26) in Achsrichtung (21) der Steuerrolle (20) von der Steuerrolle (20) weg verschiebbar und damit die Steuerrolle (20) wegklappbar ist.

2. Vorrichtung nach Anspruch 1, **dadurch gekennzeichnet, dass** die Steuerrolle (20) gleichzeitig als Antriebsrolle dient.

3. Vorrichtung nach Anspruch 1 oder 2, **dadurch gekennzeichnet, dass** die Wippe (26) über ein Getriebe, vorzugsweise ein Keilgetriebe (34), in ihrer Höhe verstellbar ist.

4. Vorrichtung nach einem der Ansprüche 1 bis 3, **dadurch gekennzeichnet, dass** die Wippe (26) seitlich in je einem Langloch (46) von seitlichen Halterungen (50) gelagert ist.

5. Vorrichtung nach einem der Ansprüche 1 bis 4, **dadurch gekennzeichnet, dass** eine Regeleinrichtung mit Sensoren (24, 28) zum Erfassen der Position des Gurtes (10) und der Lage der Steuerrolle (20) für die Regelung um einen Positions- bzw. Lagesollwert des Gurtes (10) und der Steuerrolle (20) vorgesehen ist.

6. Vorrichtung nach einem der Ansprüche 1 bis 5, **dadurch gekennzeichnet, dass** die Umschlingung der Steuerrolle (20) 90 bis 210°, vorzugsweise 150 bis 180°, beträgt.

## Claims

1. Device for regulating the linear stability of a revolving belt (10) of a transport installation by means of a control roller (20) which is arranged transversely to a belt running direction and is pressed against the belt (10) and which can be deflected by means of an actuating drive cooperating with a sensor (24) detecting the lateral position of the belt (10), in order, in the event of a lateral drift of the belt (10), to deflect the control roller (20) for the purpose of aligning the belt, the control roller (20) being mounted on an axle (21) which is mounted pivotably in the region of a first edge (11a) of the belt (10) and which is connected and displaceably guided at its second end in the region of the second edge (11b) of the belt (10) by guidance and adjustment means, the control roller (20) being arranged on the inside of the belt (10) in a belt loop (22) lying essentially perpendicularly to a transport plane and having high loop-around and is pivotable essentially perpendicularly to the transport plane, the control roller (20) being mounted on one side on a preferably electrically height-adjustable rocker (26), **characterized in that**, to demount the belt (10), the rocker (26) can be displaced away from the control roller (20) in the axial direction (21) of the latter and the control roller (20) can consequently be pivoted away.

2. Device according to Claim 1, **characterized in that** the control roller (20) serves at the same time as a drive roller.

3. Device according to Claim 1 or 2, **characterized in that** the height of the rocker (26) can be adjusted via a gear, preferably a spline gear (34).

4. Device according to one of Claims 1 to 3, **characterized in that** the rocker (26) is mounted laterally in each case in a long hole (46) of lateral mountings (50).

5. Device according to one of Claims 1 to 4, **characterized in that** a regulating device with sensors (24, 28) is provided for detecting the position of the belt (10) and the location of the control roller (20) for regulation about a position or location desired value of the belt (10) and of the control roller (20).

6. Device according to one of Claims 1 to 5, **characterized in that** the loop-around of the control roller (2

## Revendications

1. Dispositif de régulation de l'alignement d'une courroie (10), entraînée en rotation, d'une installation de transport au moyen d'une poulie de commande (20) disposée transversalement à la direction d'avance de la courroie, pressée contre la courroie (10), laquelle peut être déviée au moyen d'un entraînement de commande coopérant avec un capteur (24) établissant la position latérale de la courroie (10) afin de dévier la poulie de commande (20) dans le cas d'un écartement latéral de la courroie (10) en vue d'aligner la bande, la poulie de commande (20) étant supportée sur un axe (21) qui est supporté de manière pivotante dans la région d'un premier bord (11a) de la courroie (10) et qui est guidé dans la région du deuxième bord (11b) de la courroie (10) au niveau de sa deuxième extrémité de manière déplaçable et de manière connectée à des moyens de guidage et de réglage,
la poulie de commande (20) étant disposée avec un grand enveloppement sur le côté intérieur de la courroie (10) dans une boucle de courroie (22) située essentiellement perpendiculairement à un plan de transport et pouvant pivoter essentiellement perpendiculairement au plan de transport,
la poulie de commande (20) étant supportée d'un côté sur une bascule (26) pouvant être réglée en hauteur, de préférence de manière électrique, **caractérisé en ce que**
pour le démontage de la courroie (10), la bascule (26) peut être écartée de la poulie de commande (20) dans la direction axiale (21) de la poulie de commande (20) et ainsi la poulie de commande (20) peut être enlevée par pivotement.

2. Dispositif selon la revendication 1, **caractérisé en ce que** la poulie de commande (20) sert en même temps de poulie d'entraînement.

3. Dispositif selon la revendication 1 ou 2, **caractérisé en ce que** la bascule (26) peut être réglée en hauteur par un mécanisme, de préférence un mécanisme à clavette (34).

4. Dispositif selon l'une quelconque des revendications 1 à 3, **caractérisé en ce que** la bascule (26) est supportée latéralement dans un trou oblong respectif (46) par des fixations latérales (50).

5. Dispositif selon l'une quelconque des revendications 1 à 4, **caractérisé en ce qu'**un dispositif de réglage est pourvu de capteurs (24, 28) pour détecter la position de la courroie (10) et l'orientation de la poulie de commande (20) pour le réglage autour d'une valeur de consigne de position ou d'orientation de la courroie (10) et de la poulie de commande (20).

6. Dispositif selon l'une quelconque des revendications 1 à 5, **caractérisé en ce que** l'enveloppement de la poulie de commande (20) représente 90 à 210°, de préférence 150 à 180°.
